# EUROPEAN PATENT SPECIFICATION

(11) **EP 1 600 383 B1**
(45) Date of publication and mention of the grant of the patent: **05.09.2007**
(21) Application number: 04425377.1
(22) Date of filing: 25.05.2004
(51) Int. Cl.: B65B 67/12, A61G 12/00, B62B 5/00, B62B 1/12, B62B 1/26

(54) **Laundry trolley**
Wäschewagen
Chariot pour le linge

(43) Date of publication of application: 30.11.2005
(73) Proprietor: CONF Plastic S.r.l., 25039 Travagliato (Brescia) (IT)
(72) Inventor: Ventura, Antonio, 25039 Travagliato (Brescia) (IT)
(74) Representative: Crippa, Paolo Ernesto

(56) References cited:
- EP-A- 0 101 524

## Description

The present invention relates to a laundry trolley, in particular for collecting linen to be washed in hospitals, hotels or other places requiring high cleanliness and hygiene.

Laundry trolleys for these types of applications are already used and usually comprise a base resting on wheels, a support structure extending from said base, and a ring fixed to the top of said support structure for supporting a sack intended to contain the laundry. The ring is associated to locking means adapted for allowing easy fitting and removal of the sack to replace or wash it.

In an embodiment of the trolley, a soft element - generally made of rubber - is used as sack locking means, fitted outside the ring and bent to hold the sack edge. An example of this kind of laundry trolley is disclosed in EP 0 101 524 A.

In order to allow the use of the trolley in the utmost hygienic conditions, each part must be washable. In the type of trolley described above, interspaces form between the soft element and the ring on which it is fitted, wherein dirt may hide. For this reason, the soft element must be periodically removed from the ring to allow cleaning of both.

However, removing the soft element is not easy since the sack support ring must be wound as strictly as possible and considering that such operation should be performed by a nurse or by the cleaning staff.

From what said above it is evident that there is the need of allowing an accurate cleaning of the laundry trolley and, at the same time, a safe operation.

The problem at the basis of the present invention is that of realising a trolley which should exhibit such structural features as to meet the above requirement while solving the disadvantages mentioned above with reference to the prior art.

Such problem is solved by a trolley according to claim 1, in which there is no chance that dirt may hide between soft element and ring.

Further features and advantages of the laundry trolley according to the present invention will appear more clearly from the description hereinafter, made by way of a non-limiting example with reference to the annexed drawings, wherein:

figure 1 shows a perspective view of a laundry trolley according to the invention;

figure 2 shows a perspective partly sectioned view of a detail of sack holder ring;

figure 3 shows a cross section view of the ring in outstretched position;

figure 4 shows a cross section view of the ring in sack locking bent position;

figure 5a shows an axial section view of a detail of a connection element between the sack holder ring and the trolley uprights;

figure 5b shows an axial section view of a detail of a connection element between the base and the trolley uprights;

figure 6 shows a side view of a laundry trolley;

figure 7 shows a bottom view of a laundry trolley;

figure 8 shows a side view of a 2-sack laundry trolley;

figure 9 shows a bottom view of the laundry trolley of figure 8.

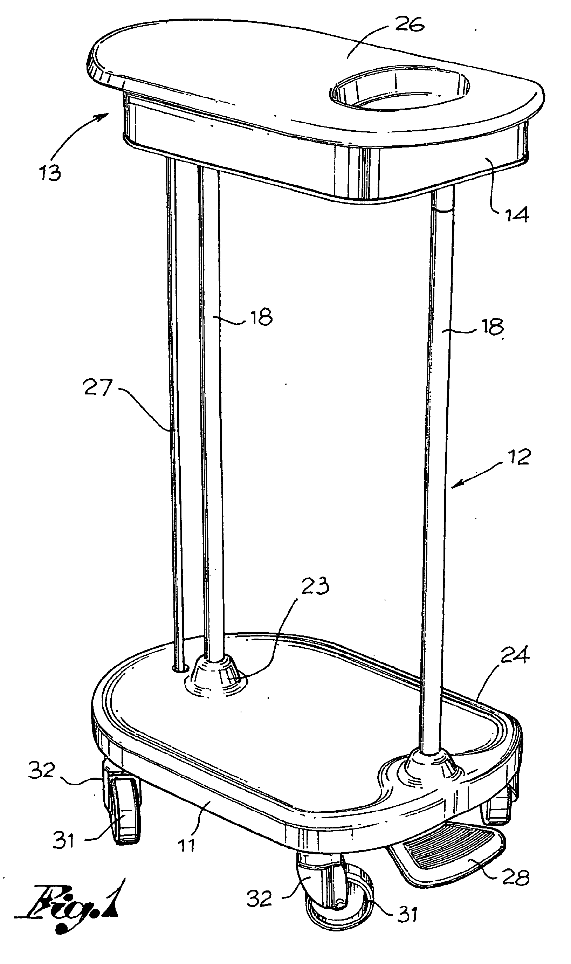

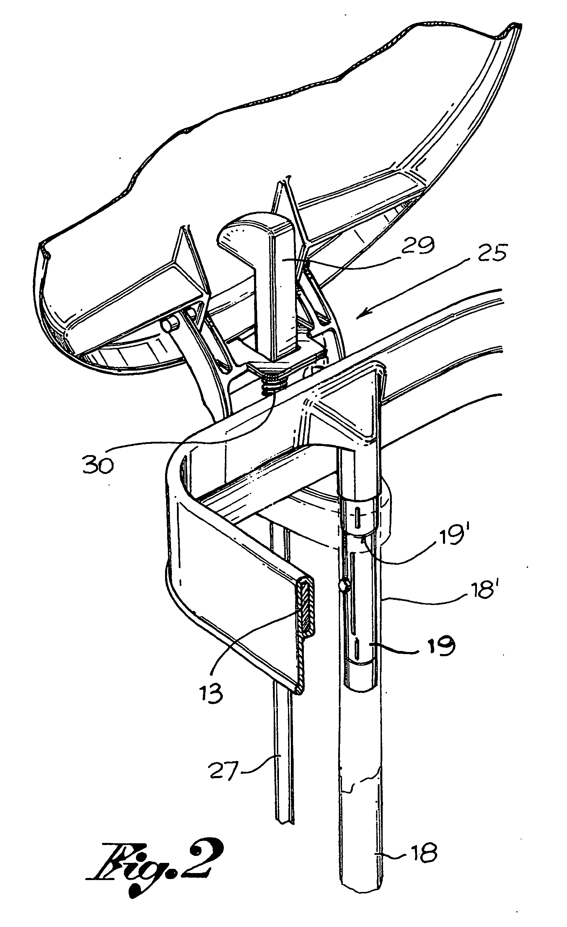

The laundry trolley according to the present invention comprises a base 11, a support frame 12 extending from said base, a sack holder ring 13 carried by said support frame 12, and a soft sealing element 14 associated to said ring for locking a sack 15.

According to the invention, the soft sealing element 14 is provided for forming a single body with said ring. In other words, the soft element 14 is inseparably coupled to ring 13. For example, the soft element fully surrounds the ring. In yet other words, between the two bodies there are no such discontinuities as to form gaps or interspaces.

According to a preferred embodiment of the invention, the soft element 14 comprises a tubular portion 16 that fully covers the sack holder ring 13 by substantially adhering, for example, strictly to it, and an annular sealing lip 17 extending from said tubular portion 16 to serve as locking element for sack 15.

According to a preferred embodiment, the soft element 14 is obtained by over-moulding the sack holder ring 13. The tubular portion 16 appears as a thin layer covering the surface of ring 13 strictly adhering to it.

In other words, portion 16 of the soft element 14 is totally closed on ring 13, so as to prevent the formation of gaps or interspaces that could facilitate the laying of dirt between the ring and the soft element.

Preferably, the soft element 14 is made of rubber.

Preferably, the soft element is made of EPDM rubber.

In an embodiment variant, the soft element 14 is made of silicone rubber.

Preferably, the sack holder ring 13 is made of nylon.

Preferably, the sack holder ring 13 is made of nylon and glass fibre.

According to an embodiment, the sealing lip 17 extends below the tubular portion 16 covering the sack holder ring 13 and is movable between an outstretched position, adapted for receiving the edge delimiting the opening of sack 15 and a bent position around ring 13 wherein the sack is held between the lip and the outside surface of portion 16 of the soft element 14 covering the ring.

Preferably, the width of lip 17 is at least equal to the height of ring 13.

Preferably, the soft element 14 exhibits a smooth surface so as to facilitate cleaning.

According to an embodiment, the sack holder ring 13, and the soft element 14 integral with it, is removably connected to the support frame 12.

According to a preferred embodiment, the support frame 12 comprises at least two vertical uprights 18 on which the sack holder ring 13 engages, for example snap-wise. Each upright 18 exhibits an upper hollow end portion 18' adapted for receiving a corresponding stem 19 extending below ring 13.

Advantageously, each stem 19 exhibits an upper portion defining a support step 19' on the end of the respective upright 18.

According to a preferred embodiment, the upper end portion 18' of each upright 18 exhibits at least one radial hole 20 wherein a corresponding pin 21 obtained in an elastically deformable portion 22 of each stem 19 is intended to engage. For example, said deformable portion 22 is obtained by making a plurality of longitudinal splits 22' into stem 19. Coupling pin 21 into hole 20 prevents an accidental separation of the sack holder ring 13 from uprights 18.

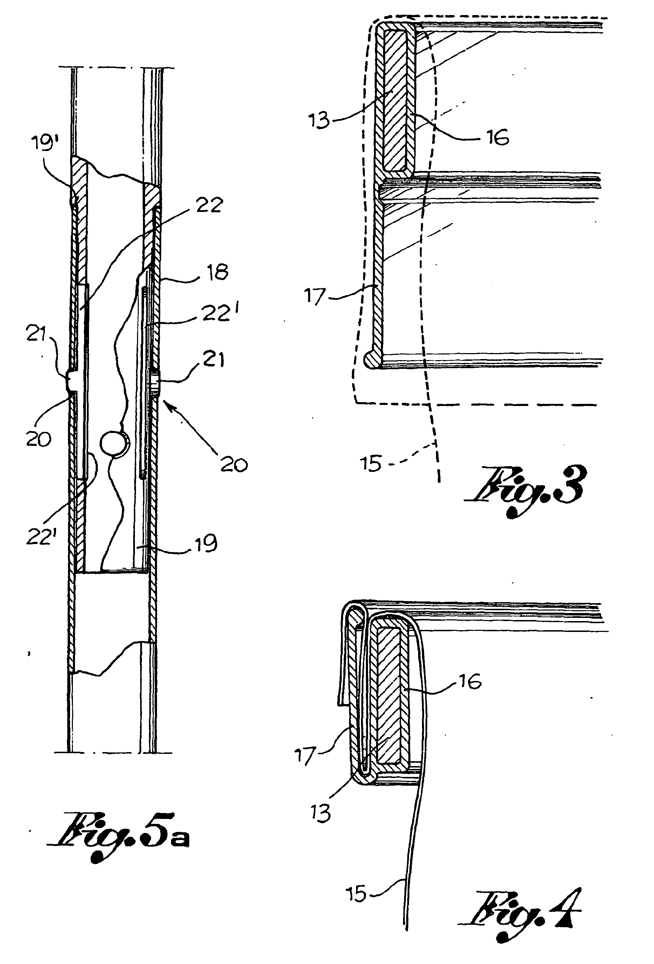

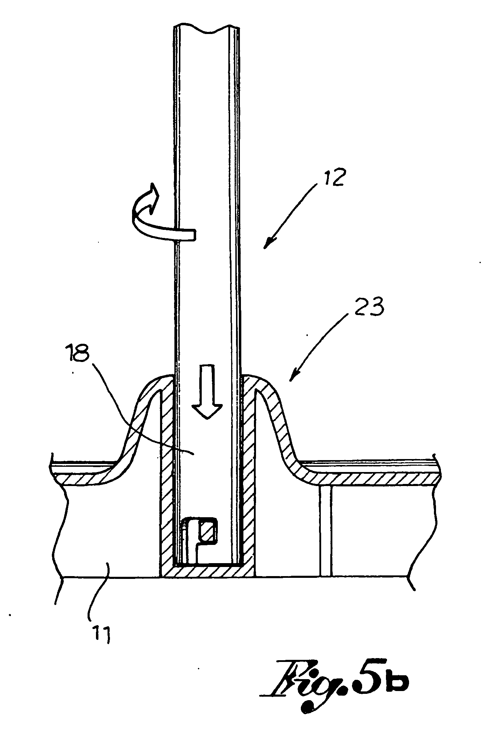

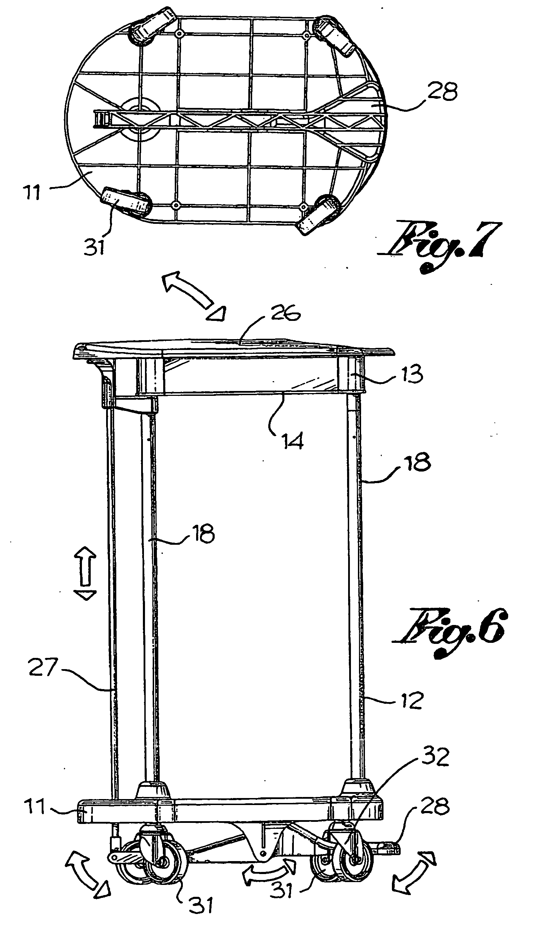

Advantageously, uprights 18 are removably engaged into corresponding seats 23 obtained into base 11, for example by a bayonet coupling (figure 5b). The latter exhibits a smooth upper surface delimited by a raised peripheral edge 24. Such shape of the base is adapted for defining a container for any liquids that may leak during the operations for filling the sack with laundry or waste.

Advantageously, base 11 is realised by pressing suitably ribbed plastic material to stand the mechanical and torsional stresses.

According to an embodiment, a hinge support structure 25 is inserted between an upright 18 of the support frame and the sack holder ring 13 for a cover 26 adapted for closing the sack holder ring. Said hinge support structure 25 is fitted around a stem 19 of the sack holder ring 13 and is blocked between the upper end of upright 18 and an undercut obtained into said stem.

Advantageously, the hinge support structure 25 is made of a plastic material by moulding.

According to a further embodiment, the trolley provided with cover 26 further comprises a return bar 27 for raise said cover by a pedal 28 provided under base 11 and connected to said bar 27.

In a preferred embodiment, bar 27 crosses the hinge support structure 25 and ends with a push rod 29 acting on an inside end of cover 26. An elastic means 30 is arranged between push rod 29 and the hinge support structure 25, for example a helical spring, adapted for damping the cover stroke during its downward movement on the sack holder ring.

Base 11 rests on pirouetting wheels 31. Advantageously, said wheels 31 are provided with a support 32 from which a pin extends, which can be pressed into a corresponding seat obtained into base 11.

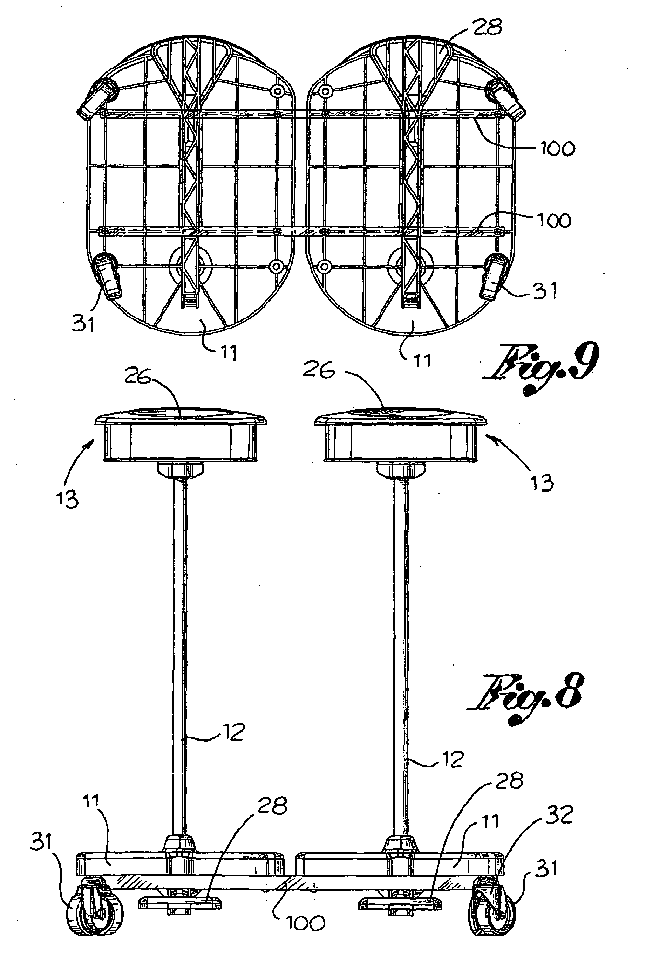

According to an embodiment, seats are further obtained into the bottom portion of base 11 for fixing a connecting frame 100 to at least another trolley to be sided to the first one (figures 8 and 9).

It should be noted that uprights 18, the return bar 27, the relevant spring and any other metal parts are made of stainless steel, for example of the type compatible with the most stringent regulations of the field.

The trolley according to the invention therefore allows obtaining a very high level of hygiene as it can be easily washed completely, also thanks to the use of smooth surfaces. In particular, the soft element can be easily cleaned without being removed from the sack holder ring. Since the latter is totally covered by the soft element, it needs no cleaning. In any case, the ring can be easily removed from the trolley in the event of replacement or for maintenance purpose.

The trolley according to the invention exhibits further advantages. It is especially light despite its sturdy structure; such structure can be fully assembled with considerable advantages during the trolley transportation and storage.

The particular structure of the soft element 14 allows easily fixing the sack so that it cannot come off, even during the most burdensome loading operations.

It is obvious that for the purpose of meeting specific requirements, a man skilled in the art can make further changes and variants to the trolley according to the present invention, all falling within the scope of protection of the invention, as defined in the following claims.

## Claims

1. Laundry trolley comprising a base (11), a support frame (12) extending from said base, a sack holder ring (13) carried by said support frame (12), and a soft sealing element (14) associated to said ring for locking a sack, **characterised in that** said soft sealing element comprises a tubular portion (16) that fully covers the sack holder ring (13) by substantially adhering to it so as to form a single body with the sack holder ring, and an annular sealing lip (17) extending from said tubular portion to serve as a sack locking element.

2. Laundry trolley according to claim 1, wherein the soft sealing element (14) is obtained by over-moulding the sack holder ring.

3. Laundry trolley according to claim 2, wherein the soft element is made of rubber.

4. Laundry trolley according to claim 3, wherein the soft element is made of EPDM rubber.

5. Laundry trolley according to claim 3, wherein the soft element is made of silicone rubber.

6. Laundry trolley according to any one of the previous claims, wherein the sack holder ring is made of nylon.

7. Laundry trolley according to any one of the previous claims, wherein the sack holder ring is made of nylon and glass fibre.

8. Laundry trolley according to any one of the preceding claims, wherein the sealing lip (17) extends below the tubular portion that covers the sack holder ring and is adapted for being bent upwards so that the sack is held between said lip and the outside surface of said tubular portion.

9. Laundry trolley according to any one of the previous claims, wherein the soft sealing element exhibits a smooth surface.

10. Laundry trolley according to any one of the previous claims, wherein the sack holder ring is removably connected to the support frame.

11. Laundry trolley according to any one of the previous claims, wherein the support frame comprises at least two vertical uprights (18) on whose upper ends the sack holder ring engages.

12. Laundry trolley according to claim 11, wherein each upright exhibits an upper hollow end portion and wherein stems (19) extend from the sack holder ring intended to removably insert into said hollow ends of the uprights of the support frame.

13. Laundry trolley according to claim 12, wherein each stem exhibits an upper portion defining a support step (19') on the end of the respective upright.

14. Laundry trolley according to claim 13, wherein the upper end portion of each upright exhibits at least one radial hole (20), and wherein each stem of the sack holder ring is provided with a radial pin (21) intended to insert into said hole, the pin being obtained on an elastically deformable portion (22) of the stem.

15. Laundry trolley according to claim 14, wherein said elastically deformable portion of each stem is obtained by making a plurality of longitudinal splits (22') into the stem.

16. Laundry trolley according to any one of the previous claims, wherein the support frame is removably connected to the base.

17. Laundry trolley according to any one of claims from 11 to 16, wherein the uprights of the support frame engage into the corresponding seats (23) obtained into the base.

18. Laundry trolley according to any one of the previous claims, wherein the base exhibits a smooth upper surface delimited by a raised peripheral edge (24).

19. Laundry trolley according to any one of the previous claims, wherein the base is made of a plastic material by moulding.

20. Laundry trolley according to any one of the previous claims, wherein a hinge support structure (25) is inserted between an upright of the support frame and the sack holder ring for a cover (26) adapted for closing the sack holder ring.

21. Laundry trolley according to claim 20, wherein Said hinge support structure is fitted around a stem of the sack holder ring and is blocked between the upper end of an upright of the support frame and an undercut obtained into said stem.

22. Laundry trolley according to claim 21, wherein the hinge support structure is made of a plastic material by moulding.

23. Laundry trolley according to any one of claims from 20 to 22, comprising a bar (27) for raising the trolley cover connected to a pedal (28) provided below the base.

24. Laundry trolley according to claim 23, wherein said bar crosses the hinge support structure and ends with a push rod (29) acting on an inside end of the cover.

25. Laundry trolley according to claim 24, wherein an elastic means (30) is arranged between the push rod and the hinge support structure, adapted for damping the cover stroke during its downward movement on the sack holder ring.

26. Laundry trolley according to any one of the previous claims, wherein the base rests on pirouetting wheels (31).

27. Laundry trolley according to claim 26, wherein said wheels exhibit a support (32) having a pin insertable by pressure into a respective seat obtained into the base.

28. Laundry trolley according to any one of the previous claims, wherein seats are obtained into the bottom portion of the base for fixing a connecting frame (100) to at least another trolley to be sided to the first one.

29. Method for realising a structure for supporting and locking a sack for laundry trolleys, comprising the steps of:
a. realising a sack holder ring;
b. injecting soft material around said sack holder ring so as to form a coating surrounding said ring, and a bending lip extending from said coating.

## Patentansprüche

1. Wäschewagen mit einer Basis (11), einem sich aus der Basis erstreckenden Trägerrahmen (12), einem von dem Trägerrahmen (12) getragenen Beutelhalterungsring (13) und einem zu dem Ring gehörenden weichen Dicht- bzw. Versiegelungselement (14) zum Arretieren eines Beutels, **dadurch gekennzeichnet, dass** das weiche Dicht- bzw. Versiegelungselement einen röhrenförmigen Abschnitt (16) umfasst, der den Beutelhalterungsring (13) vollständig abdeckt, indem er im Wesentlichen an ihm haftet, um einen einzigen Körper mit dem Beutelhalterungsring zu bilden, und eine ringförmige Dicht- bzw. Versiegelungslippe (17), die sich aus dem röhrenförmigen Abschnitt erstreckt, um als Beutelarretierelement zu dienen.

2. Wäschewagen nach Anspruch 1, wobei das weiche Dicht- bzw. Versiegelungselement (14) durch Überformen (overmoulding) des Beutelhalterungsrings erhalten wird.

3. Wäschewagen nach Anspruch 2, wobei das weiche Element aus Kautschuk bzw. Gummi gefertigt ist.

4. Wäschewagen nach Anspruch 3, wobei das weiche Element aus EPDM Kautschuk gefertigt ist.

5. Wäschewagen nach Anspruch 3, wobei das weiche Element aus Silikonkautschuk gefertigt ist.

6. Wäschewagen nach einem der vorangehenden Ansprüche, wobei der Beutelhalterungsring aus Nylon gefertigt ist.

7. Wäschewagen nach einem der vorangehenden Ansprüche, wobei der Beutelhalterungsring aus Nylon und Glasfaser gefertigt ist.

8. Wäschewagen nach einem der vorangehenden Ansprüche, wobei sich die Dicht- bzw. Versiegelungslippe (17) unter dem röhrenförmigen Abschnitt erstreckt, der den Beutelhalterungsring abdeckt, und geeignet ist, um nach oben gebogen zu werden, so dass der Beutel zwischen der Lippe und der Außenfläche des röhrenförmigen Abschnitts gehalten wird.

9. Wäschewagen nach einem der vorangehenden Ansprüche, wobei das weiche Dicht- bzw. Versiegelungselement eine glatte Fläche aufweist.

10. Wäschewagen nach einem der vorangehenden Ansprüche, wobei der Beutelhalterungsring entfernbar mit dem Trägerrahmen verbunden ist.

11. Wäschewagen nach einem der vorangehenden Ansprüche, wobei der Trägerrahmen zumindest zwei senkrechte Vertikalständer (18) aufweist, auf deren oberen Enden der Beutelhalterungsring Halt findet.

12. Wäschewagen nach Anspruch 11, wobei jeder Vertikalständer einen oberen hohlen Endabschnitt aufweist und wobei sich Stiele bzw. Schäfte (19) aus dem Beutelhalterungsring erstrecken, die zur entfernbaren Einführung in die hohlen Enden der Vertikalständer des Trägerrahmens bestimmt sind.

13. Wäschewagen nach Anspruch 12, wobei jeder Stiel bzw. Schaft einen oberen Abschnitt aufweist, der eine Stützabstufung (19') auf dem Ende des jeweiligen Vertikalständers definiert.

14. Wäschewagen nach Anspruch 13, wobei der obere Endabschnitt jedes Vertikalständers zumindest ein radiales Loch (20) aufweist, und wobei jeder Stiel bzw. Schaft des Beutelhalterungsrings mit einem radialen Stift (21) versehen ist, der zum Einführen in das Loch bestimmt ist, wobei der Stift auf einem elastisch verformbaren Abschnitt (22) des Stiels bzw. Schafts geschaffen wird.

15. Wäschewagen nach Anspruch 14, wobei der elastisch verformbare Abschnitt jedes Stiels bzw. Schafts erhalten wird, indem eine Mehrzahl longitudinaler Schlitze (22') in den Stiel bzw. Schaft gemacht wird.

16. Wäschewagen nach einem der vorangehenden Ansprüche, wobei der Trägerrahmen entfernbar mit der Basis verbunden ist.

17. Wäschewagen nach einem der Ansprüche 11 bis 16, wobei die Vertikalständer des Trägerrahmens in die entsprechenden Sitze (23) greifen, die in der Basis geschaffen sind.

18. Wäschewagen nach einem der vorangehenden Ansprüche, wobei die Basis eine glatte Oberfläche aufweist, die von einem erhöhten peripheren Rand (24) begrenzt ist.

19. Wäschewagen nach einem der vorangehenden Ansprüche, wobei die Basis aus einem Kunststoffmaterial durch Formen bzw. Formgeben gefertigt ist.

20. Wäschewagen nach einem der vorangehenden Ansprüche, wobei eine Gelenkstützstruktur (25) zwischen einem Vertikalständer des Trägerrahmens und dem Beutelhalterungsring für eine Abdeckung (26) eingefügt ist, die sich zum Schließen des Beutelhalterungsrings eignet.

21. Wäschewagen nach Anspruch 20, wobei die Gelenkstützstruktur um einen Stiel bzw. Schaft des Beutelhalterungsrings eingepasst ist und zwischen dem oberen Ende eines Vertikalständers des Trägerrahmens und einem Unterschnitt blockiert ist, der in dem Stiel bzw. Schaft geschaffen ist.

22. Wäschewagen nach Anspruch 21, wobei die Gelenkstützstruktur aus einem Kunststoffmaterial durch Formen bzw. Formgeben gefertigt ist.

23. Wäschewagen nach einem der Ansprüche 20 bis 22, umfassend eine Stange (27) zum Anheben der Wagenabdeckung, verbunden mit einem unter der Basis vorgesehenen Pedal (28).

24. Wäschewagen nach Anspruch 23, wobei die Stange die Gelenkstützstruktur kreuzt und mit einer Druckstange (29) endet, die auf ein inneres Ende der Abdeckung wirkt.

25. Wäschewagen nach Anspruch 24, wobei ein elastisches Mittel (30) zwischen der Druckstange und der Gelenkstützstruktur angeordnet ist, das zum Dämpfen des Aufschlags der Abdeckung während deren Abwärtsbewegung auf den Beutelhalterungsring geeignet ist.

26. Wäschewagen nach einem der vorangehenden Ansprüche, wobei die Basis auf pirouettierenden Rädern (31) ruht.

27. Wäschewagen nach Anspruch 26, wobei die Räder ein Lager (32) mit einem Stift aufweisen, der durch Druck in einen jeweiligen Sitz einführbar ist, der in der Basis geschaffen ist.

28. Wäschewagen nach einem der vorangehenden Ansprüche, wobei Sitze im unteren Abschnitt der Basis geschaffen werden zwecks Befestigung eines Verbindungsrahmens (100) an zumindest einem weiteren Wagen, der an der Seite des ersten angeordnet wird.

29. Verfahren zur Ausführung einer Struktur zum Tragen und Arretieren eines Beutels für Wäschewagen, das die folgenden Schritte umfasst:
a. Ausführen eines Beutelhalterungsrings;
b. Einspritzen weichen Materials um den Beutelhalterungsring, damit ein Überzug gebildet wird, der den Ring und eine Biegelippe umgibt, die sich aus dem Überzug erstreckt.

## Revendications

1. Chariot pour le linge comprenant une base (11), un châssis support (12) s'étendant depuis ladite base, un anneau porte sac (13) porté au moyen dudit châssis support (12), et un élément scellant mou (14) associé audit anneau pour fermer un sac, **caractérisé en ce que** ledit élément scellant mou comprend une partie tubulaire (16) qui couvre complètement l'anneau porte sac (13) en adhérant sensiblement à celui-ci de façon à former un seul corps avec l'anneau porte sac, et une lèvre scellante annulaire (17) s'étendant depuis ladite partie tubulaire pour servir d'élément de fermeture de sac.

2. Chariot pour le linge selon la revendication 1, dans lequel l'élément scellant mou (14) est obtenu en surmoulant l'anneau porte sac.

3. Chariot pour le linge selon la revendication 2, dans lequel l'élément mou est fait de caoutchouc.

4. Chariot pour le linge selon la revendication 3, dans lequel l'élément mou est fait de caoutchouc EPDM.

5. Chariot pour le linge selon la revendication 3, dans lequel l'élément mou est fait de caoutchouc silicone.

6. Chariot pour le linge selon l'une quelconque des revendications précédentes, dans lequel l'anneau porte sac est fait de nylon.

7. Chariot pour le linge selon l'une quelconque des revendications précédentes, dans lequel l'anneau porte sac est fait de nylon et de fibre de verre.

8. Chariot pour le linge selon l'une quelconque des revendications précédentes, dans lequel la lèvre scellante (17) s'étend en dessous de la partie tubulaire qui couvre l'anneau porte sac et est adaptée pour être pliée vers le haut de façon à ce que le sac soit maintenu entre ladite lèvre et la surface extérieure de ladite partie tubulaire.

9. Chariot pour le linge selon l'une quelconque des revendications précédentes, dans lequel l'élément scellant mou présente une surface lisse.

10. Chariot pour le linge selon l'une quelconque des revendications précédentes, dans lequel l'anneau porte sac est connecté de façon amovible au châssis support.

11. Chariot pour le linge selon l'une quelconque des revendications précédentes, dans lequel le châssis support comprend au moins deux montants verticaux (18) sur les extrémités supérieures desquelles s'engage l'anneau porte sac.

12. Chariot pour le linge selon la revendication 11, dans lequel chaque montant montre une partie d'extrémité creuse supérieure et dans laquelle des tiges (19) s'étendent depuis l'anneau porte sac et destinées à s'insérer de façon amovible dans lesdites extrémités creuses des montants du châssis support.

13. Chariot pour le linge selon la revendication 12, dans lequel chaque tige présente une partie supérieure définissant un pas de support (19') sur l'extrémité du montant respectif.

14. Chariot pour le linge selon la revendication 13, dans lequel la partie d'extrémité supérieure de chaque montant présente au moins un trou radial (20), et dans lequel chaque tige de l'anneau porte sac est munie d'une broche radiale (21) destinée à être insérée dans ledit trou, la broche étant obtenue sur une partie de la tige déformable élastiquement (22).

15. Chariot pour le linge selon la revendication 14, dans lequel ladite partie déformable élastiquement de chaque tige est obtenue en faisant une pluralité de fentes longitudinales (22') dans la tige.

16. Chariot pour le linge selon l'une quelconque des revendications précédentes, dans lequel le châssis support est connecté de façon amovible à la base.

17. Chariot pour le linge selon l'une quelconque des revendications 11 à 16, dans lequel les montants du châssis support s'engagent dans les assises correspondantes (23) obtenues dans la base.

18. Chariot pour le linge selon l'une quelconque des revendications précédentes, dans lequel la base présente une surface supérieure lisse délimitée au moyen d'un bord périphérique élevé (24).

19. Chariot pour le linge selon l'une quelconque des revendications précédentes, dans lequel la base est faite d'un matériau plastique par moulage.

20. Chariot pour le linge selon l'une quelconque des revendications précédentes, dans lequel une structure support à charnière (25) est insérée entre un montant du châssis support et l'anneau porte sac pour un couvercle (26) adapté pour fermer l'anneau porte sac.

21. Chariot pour le linge selon la revendication 20, dans lequel ladite structure support à charnière est adaptée autour d'une tige de l'anneau porte sac et bloquée entre l'extrémité supérieure d'un montant du châssis support et une encoche obtenue dans ladite tige.

22. Chariot pour le linge selon la revendication 21, dans lequel la structure support à charnière est faite d'un matériau plastique par moulage.

23. Chariot pour le linge selon l'une quelconque des revendications 20 à 22, comprenant une barre (27) pour élever le couvercle de chariot connectée à une pédale (28) procurée en dessous de la base.

24. Chariot pour le linge selon la revendication 23, dans lequel ladite barre croise la structure support à charnière et les extrémités avec une barre de liaison (29) agissant sur une extrémité intérieure du couvercle.

25. Chariot pour le linge selon la revendication 24, dans lequel un moyen élastique (30) est disposé entre la barre de liaison et la structure support à charnière, adaptée pour amortir la course du couvercle pendant son mouvement vers le bas sur l'anneau porte sac.

26. Chariot pour le linge selon l'une quelconque des revendications précédentes, dans lequel la base repose sur des roues pirouettantes (31).

27. Chariot pour le linge selon la revendication 26, dans lequel lesdites roues montrent un support (32) ayant une broche insérable par pression dans une assise respective obtenue dans la base.

28. Chariot pour le linge selon l'une quelconque des revendications précédentes, dans lequel les assises sont obtenues dans la partie inférieure de la base pour fixer un châssis de connexion (100) à au moins un autre chariot latéral au premier.

29. Procédé pour réaliser une structure pour supporter et verrouiller un sac pour des chariots pour le linge, comprenant les étapes de :
a. réalisation d'un anneau porte sac ;
b. d'injection d'un matériau mou autour dudit anneau porte sac de façon à former un revêtement entourant ledit anneau, et une lèvre de pliage s'étendant depuis ledit revêtement.
